# EUROPEAN PATENT APPLICATION

(11) **EP 1 395 016 A1**
(43) Date of publication of application: **03.03.2004**
(21) Application number: 03015432.2
(22) Date of filing: 09.07.2003
(51) Int. Cl.: H04L 29/06, G06F 1/00

(54) **Method and device for exchanging protected data through a non-secure network**

(30) Priority: 11.07.2002 IT MI20021525
(71) Applicant: Microsystems S.r.l., 20124 Milano (IT)
(72) Inventor: Tausel, Marco, 20123 Milano (IT)
(74) Representative: Gervasi, Gemma, Dr.

(57) **Abstract**

An electronic device, placed between the user interface and a non-secure data transmission network that allows the exchange of data strings "protected" by means of security algorithms with a remote user is described.

The electronic device, by operating in co-operation with the user interface, protects the data strings (arriving "in the clear" from the user interface) to be sent to the remote user through the non-secure data transmission network and sends data strings protected by a similar device placed by the remote user and received from the non-secure data transmission network "in the clear" to the user interface.

Advantageously, the electronic device object of the present invention is connected to the user interface through bi-directional wireless, for example, infrared, connection means.
The user interface consists of one of the known types of interface apparatus that allow the entering and/or displaying of data and can advantageously be constituted by a remote control or by a palm-held PDA (Personal Digital Assistant).

## Description

The invention consists in a method and electronic device to be associated to a user interface in order to send protected data strings to another remote user, by means of a non-secure data transmission network, and to send data strings, protected by a similar device placed by the remote user, received by the non-secure data transmission network, "unprotected" to the user (by means of the user interface).

The protection systems that are currently most diffused for protecting telematic transactions (i.e the exchange of data strings) and making them more secure, are based on the use of passwords and ciphering algorithms.

Said algorithms can be very advanced and theoretically also very secure, but they are activated with passwords that the users type in freely from the keyboard (or another equivalent means) making them arrive directly (in a legible way to anyone who may have "sneaked" in to the system) to the Personal Computer (or another functionally equivalent means) that constitutes the input/output "gate" of a non-secure data transmission network (for example: Internet).

In the present description, the input/output "gate" of the non-secure data transmission network consists of a processor, for example a Personal Computer.

Programs which, when loaded illicitly into a Personal Computer, acquire the "sensitive" data associated to preset words and/or phrases (for example "user ID", "password", et cetera) and send them (automatically or on request), through the data transmission network to which the "infected" Personal Computer is connected, to the person who "infected" the Personal Computer without the user using the Personal Computer being able to notice the intrusion, are in fact known.

The "unprotected" sending of the passwords to the Personal Computer therefore constitutes (or can constitute) a weak point of current security systems, a weak point that is overcome using a device according to the invention that receives "sensitive" data and commands (e.g. passwords) "unprotected" from the user interface and sends them to the Personal Computer after having protected them by means of codification/verification operations using, according to the various versions, standard ciphering algorithms such as, for example, those known as EAS, IDEA, SERPENT-1, BLOWFISH, DES, 3DES, RSA, et cetera.

Such standard algorithms are advantageously also used to protect non-"sensitive" data to be sent to the remote user by means of the non-secure data transmission network.

Moreover, the same standard algorithms are (or can be) used to decode the protected data ("sensitive" or otherwise) received from the remote user through the non-secure data transmission network.

The object of the present invention is a method and electronic device for exchanging protected data strings through a non-secure data transmission network, which is placed between one user interface and the non-secure data transmission network, as described in the annexed claims, which form an integral part of the present description.

Advantageously, the device is connected to the user interface through bi-directional wireless, preferably infrared, connection means.

The invention will now be better described with reference to a non-limiting embodiment illustrated in the attached figures, wherein:
- figure 1 shows a block diagram of a device according to the invention;
- figure 2 schematically shows the device in figure 1 placed between a user interface and a non-secure data transmission network;
- figures 3 and 4 show the flow charts of two programmes performed simultaneously in the device and in the user interface;
- figures from 5 to 9 schematically show certain types of transaction in which a device according to the invention can be advantageously used.

In the attached figures, the corresponding elements will be identified by means of the same numerical references.

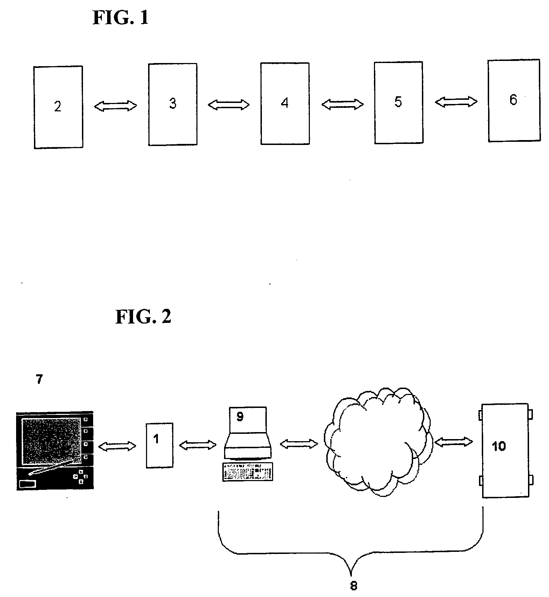

Figure 1 shows a block diagram of an electronic device 1 (figure 2), created according to the invention and suitable for exchanging protected data strings through a non-secure data transmission network 8 (figure 2), that is placed between a user interface 7 (figure 2) and the non-secure data transmission network 8.

The device 1 is connected to the user interface 7 by means of bi-directional wireless, preferably infrared connection means 2 and comprises at least, in combination with one another:
- the bi-directional wireless connection means 2;
- a first interface unit 3, placed between the bi-directional wireless connection means 2 and a logic unit 4;
- the logic unit 4;
- a second interface unit 5, placed between the logic unit 4 and wired bi-directional connection means 6;
- the wired bi-directional connection means 6, constituted (preferably but not necessarily) by a serial or USB port.

The connection means (2, 6), the first and second interface unit (3, 5) and the logic unit 4 will not be further described being known per se. Preferably, the device 1 comprises (in addition to at least one RAM work memory and at least one ROM program memory) at least one further memory in which "sensitive" data (confidential data, passwords, et cetera) are memorised and crypted.

Advantageously this further memory is an EEPROM-type data memory, which allows for easy updating of the "sensitive" data contained therein.

The RAM work and ROM program memories are intrinsically protected as they are made on the same silicon support on which the CPU of the logic unit 4 is made; the content of the further memory is protected by being crypted with a univocal key resident in the ROM memory.

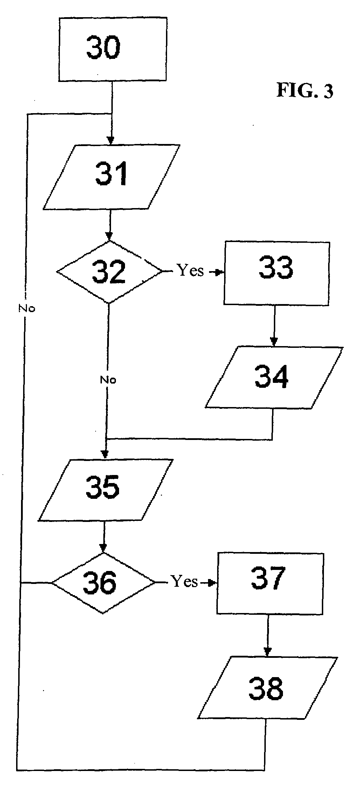

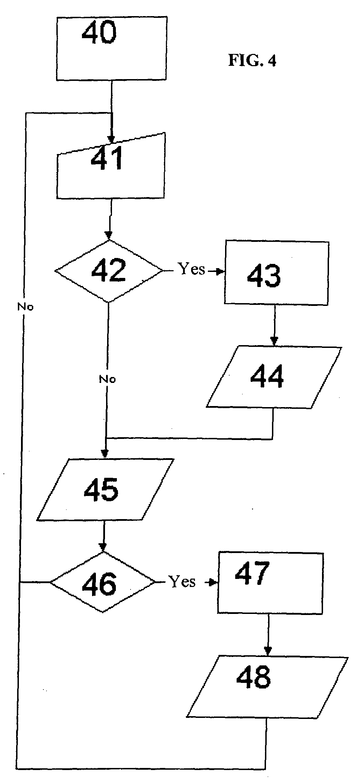

Advantageously, some programs are performed simultaneously in the device 1 and in the user interface 7: the flow diagrams of two of such programs are shown, as non-limiting examples, in figures 3 and 4.

Moreover, well-known coding/decoding algorithms "circulate" inside the user interface: the device 1 therefore receives suitable commands in protected format from the user interface 7 (through the wireless connection means 2) and sends to the user interface 7 (always in protected format) information on the state of data processing in order to activate preset procedures such as, for example, displaying the results of processing performed.

The user interface 7 also highlights (for example, displays) any fraudulent actions (detected by the device 1 object of the present invention) and the corrective actions (not described herein being known per se, for example similar to those implemented in automatic cash teller terminals) activated by the device 1 in response to any fraudulent actions detected.

The device 1 is a portable object and of limited dimensions that, in an embodiment not illustrated in the attached figures, also comprises a chip card reader/writer and a magnetic card reader which are not described because they are known per se.

The insertion of unauthorised plastic cards with microchips (also known as SMART CARDS or CHIP CARDS) will also activate suitable blockage procedures, not described herein because they are known per se.

Figure 2 schematically shows the device 1 placed between the user interface 7 and a non-secure data transmission network 8 that, in the embodiment illustrated in figure 2, comprises the Personal Computer 9, the actual non-secure data transmission network (for example: Internet) and a remote computer 10 (for example a "Server").

The device 1 receives the data to be sent "unprotected" from the user interface 7, sends it to the non-secure data transmission network 8 after having protected it by means of coding/decoding operations, decodes the protected data received from a remote user through the non-secure data transmission network 8 and that sends the decoded data to the user interface 7.

As mentioned previously, preferably the logic unit 4 pertaining to the device 1 performs the codification/verification and decodification operations using standard ciphering/deciphering algorithms (EAS, IDEA, SERPENT-1, BLOWFISH, DES, 3DES, RSA., et cetera), not described herein because they are known per se; advantageously, such algorithms can also be used on the user interface 7.

The user interface 7 consists of one of the known types of interface apparatus that allow the entering and/or displaying of data and can advantageously be constituted by a remote control or by a palm-held PDA (Personal Digital Assistant), optionally modified in order to adapt them to the user's specific needs: such modifications can be performed by a man skilled in the art without having to perform inventive activities and they will therefore not be described herein.

The user interface 7 is therefore intrinsically secure because it is not subject to assault from "computer viruses".

The data strings, protected by means of the device 1, that are exchanged between two users through the non-secure data transmission network 8 comprise at least "sensitive" data; preferably such data strings also comprise non "sensitive" data.

The use of the device 1 in combination with the user interface 7 and the Personal Computer 9 allows a high interaction with the operator, and resolves the problem of the interaction present in devices provided with only optic/acoustic indicators.

With regards to the method object of the invention, figures 3 and 4 show, by way of a non-limiting example, the flow diagrams of two programs performed simultaneously in the device 1 and in the user interface 7.

Figure 3 schematically shows the flow diagram of the program performed by the logic unit 4 of the device 1.

After an optional start-up and initialisation step (step 30), the logic unit 4 of the device 1 receives a data string (step 31) from the user interface 7 (through the bi-directional interface 2) and, having verified (step 32) that a new data string has been acquired, it processes it (step 33), sends it to the Personal Computer 9 pertaining to the non-secure data transmission network 8 (step 34) and receives data from the Personal Computer 9 (step 35); otherwise the logic unit 4 receives data from the Personal Computer 9 (step 35).

Having received the data from the Personal Computer 9 (step 35), the logic unit 4 verifies (step 36) that new data has been received, processes it (step 37) preparing the data strings to be sent to the user interface 7, sends (step 38) such strings to the user interface 7 (through the bi-directional interface 2) and receives a data string (step 31) from the user interface 7 (through the bi-directional interface 2); otherwise the logic unit 4 receives a data string (step 31) from the user interface 7 (through the bi-directional interface 2).

In figure 3, the processing steps (33, 37) are not described because they are correlated to the specific user needs and in any case implementable by a man skilled in the art without having to perform any inventive activity; the logic structure schematically indicated in figure 3 is shown by way of a non-limiting example only.

Figure 4 schematically shows the flow diagram of the program performed by the user interface 7.

After an optional starting-up and/or initialisation step (step 40), the logic unit of the user interface 7 receives a data string (step 41) from the user (through entry means constituted by a keyboard and/or other functionally equivalent means) and, having verified (step 42) that it is a new data string, processes it (step 43), sends it (through the bi-directional interface 2) to the device 1 (step 44) and receives a data string (step 45) from the device 1 (through the bi-directional interface 2); otherwise it receives a data string through the bi-directional interface 2 (step 45) from the device 1.

Having received a data string from the device 1 through the bi-directional interface 2 (step 45), the logic unit of the user interface 7 verifies (step 46) that it has received a new data string, processes it (step 47) and receives a data string (step 41) from the user (through the entry means); otherwise it receives a data string (step 41) from the user (through the entry means).

In figure 4, the processing steps (43, 47) are not described because they are correlated to the specific needs of the user and in any case implementable by a man skilled in the art without having to perform inventive activities; the logic structure schematically indicated in figure 4 is shown by way of a mere non-limiting example.

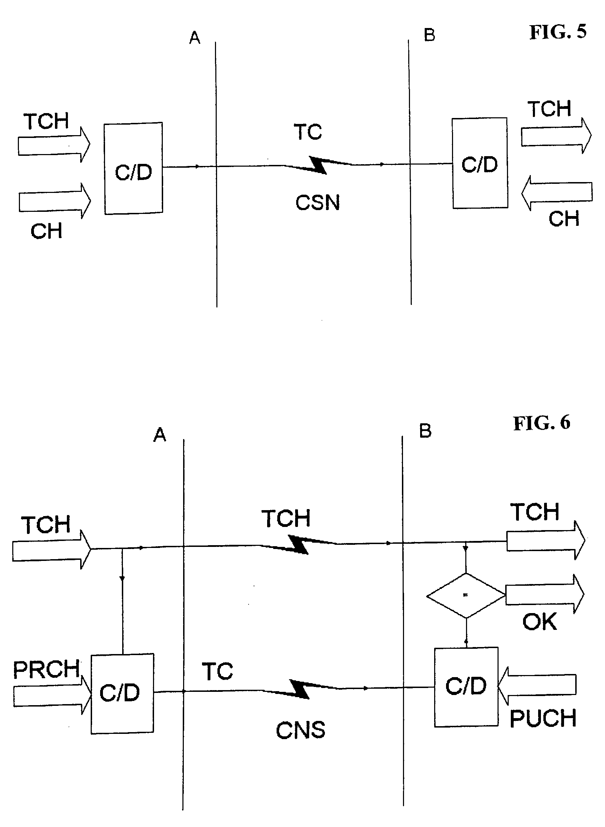

Figures 5 to 9 schematically show certain types of transaction (not further described because they are known per se) in which one can advantageously use a device according to the invention that is suitable for achieving at least one of the following telematic transactions:
1) Mutual certification of the users and the good outcome of the transaction, that makes it possible to verify that the data effectively comes from the declared origin and that the data sent reaches the desired destination only.
   For the mutual certification between local and remote operator known symmetrical-type (for example DES/AES) or asymmetrical type (for example RSA) algorithms are used, integrating:
   a) the remote identification of a local operator provided with the device 1, performed at least by means of a password typed in by the local operator on the interface 7 and transmitted to the device that codifies it by means of a known algorithm.
      The insertion into the reader of the device (if present) of a plastic card with microchip (also known as SMART CARD or CHIP CARD) and/or the detection of the operator's biometric characteristics (for example, fingerprint), processed by the device 1 or by the Personal Computer 9 can be associated to the password.
   b) the local certification of a remote operator provided with a device 1, that has been identified with the modalities indicated in the previous point, is performed by the device 1 by analysing the "digital signature" sent by the remote operator by means of known algorithms.
2) Non-repudiability of the transaction: the sender cannot deny the sending of the documents transmitted and the receiver cannot deny to have received them;
   This aim is achieved using the device 1 together with the user interface 7 and by adopting known mutual certification techniques comprising iterations for certifying the sending and receipt of data by means of known symmetric (for example DES/AES) or asymmetric (for example RSA) type algorithms.
   The device can be provided with a reader for plastic cards with microchips (also known as SMART CARDS or CHIP CARDS) used to contain electronic signature keys.
3) Verification of the authenticity of the data received: allows to detect whether the data transmitted is varied during the transmission or once they have reached their destination.
   The certification of the originality of data and/or digital documents and the subsequent verification of authenticity is performed using the device 1 together with the user interface 7 and adopting known techniques of mutual certification comprising iterations in order to certify the sending and the receipt of the data by means of symmetric (for example DES/AES) or asymmetric (for example RSA) known algorithms.
4) High protection of crypted data.

The crypting of digital data and documents is performed using the device 1 together with the user interface 7 and adopting known techniques of mutual certification comprising iterations to certify the sending and the receipt of the data by means of known symmetric (for example DES/AES) or asymmetric (for example RSA) algorithms.

The device can be provided with a reader of plastic cards with microchip (also known as SMART CARDS or CHIP CARDS) used to contain cryptography keys.

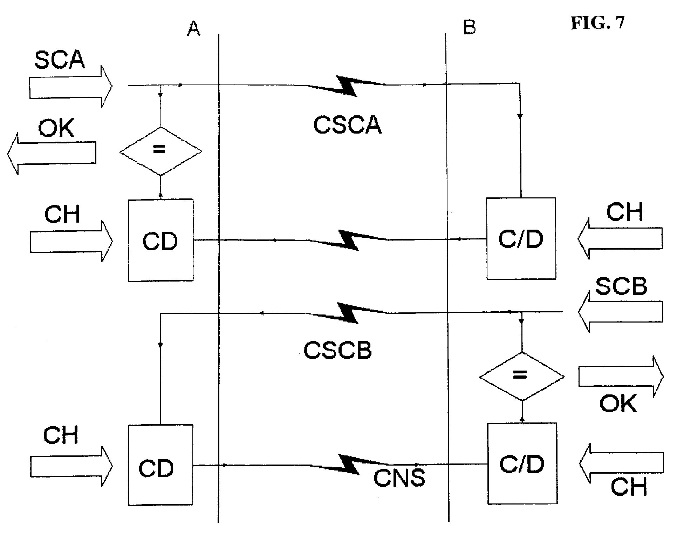

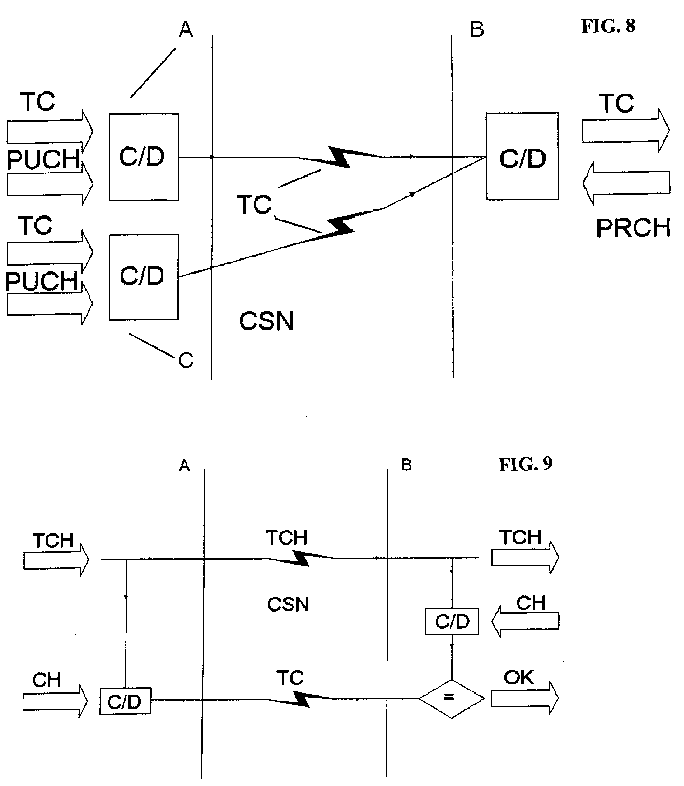

Figure 5 shows the sending of a ciphered text by means of a symmetric-type algorithm; figure 6 shows the sending of a ciphered "electronic signature" by means of an asymmetric-type algorithm; figure 7 shows a mutual certification by means of a symmetrical type algorithm; figure 8 shows the sending, by users A and C, of a text ciphered by means of a symmetric-type algorithm; figure 9 shows a verification of authenticity of a text ciphered by means of a symmetric-type algorithm.

In figures 5-9 the following abbreviations are used:
A = local user;
B = remote user;
C = further local user;
C/D = coding/decoding means using symmetric or asymmetric-type algorithms;
CH = key for symmetric-type algorithms;
CNS = non-secure transmission network;
CSCA = data string coded by user A with a symmetric-type algorithm;
CSCB = data string coded by user B with a symmetric-type algorithm;
OK = transaction checked with positive outcome;
PRCH = private key for asymmetric-type algorithms;
PUCH = public key for asymmetric type algorithms;
SCA = data string "unprotected" generated by user A;
SCB = data string "unprotected" generated by user B;
TC = coded text;
TCH = text "unprotected".

Without departing from the scope of the invention it is possible for a man skilled in the art to make any modifications and perfections suggested by normal experience and by the natural evolution of the technique to the protection device object of the present description.

The present invention can advantageously be achieved through a computer program that comprises codification means for the embodiment of one or more steps of the method, when this program is run on a computer. It is therefore understood that the scope be extended to said computer program and also to computer-legible means that comprise a recorded message, said computer-legible means comprising computer coding means for the creation of one or more steps of the method, when said program is run on a computer.

## Claims

1. An electronic device suitable for exchanging protected data strings through a non-secure data transmission network, **characterized in that** it is placed between a user interface (7) and the non-secure data transmission network (8).

2. The device according to claim 1, **characterized in that** it is connected to the user interface (7) through bi-directional wireless connection means (2).

3. The device according to claim 2, **characterized in that** the bi-directional wireless connection means (2) are infrared connection means.

4. The device according to claim 2, **characterized in that** it comprises, in combination:
- the bi-directional wireless connection means (2);
- a first interface unit (3), placed between the bi-directional wireless connection means (2) and a logic unit (4);
- the logic unit (4);
- a second interface unit (5), placed between the logic unit (4) and the wired bi-directional connection means (6);
- the wired bi-directional connection means (6).

5. The device according to claim 4, **characterized in that** the wired bi-directional connection means (6) consist of a serial or USB port.

6. The device according to claim 1, **characterized in that** it further comprises at least one further memory inside which crypted "sensitive" data is memorised.

7. The device according to claim 6, **characterized in that** the further memory is an EEPROM-type data memory.

8. The device according to claim 1, **characterized in that** it further comprises a chip card reader/writer and/or a magnetic card reader.

9. The device according to claim 1, **characterized in that** the user interface (7) consists of a remote control or by a palm-held PDA (Personal Digital Assistant).

10. The device according to claim 1, **characterized in that** the protected data strings exchanged through the non-secure data transmission network (8) comprise at least "sensitive" data"

11. The device according to claim 10, **characterized in that** the protected data strings exchanged through the non-secure data transmission network (8) also comprise non "sensitive" data

12. A method for exchanging protected data strings through a data transmission network, using a device according to any of the claims 1 to 11, **characterized in that** in the user interface (7) coding/decoding algorithms run and wherein the electronic device (1) receives commands in a protected format from the user interface (7), and sends information on the processing status of the data, also in protected format, to the user interface (7), in order to activate preset procedures.

13. The method according to claim 12, **characterized in that** the user interface (7) highlights any fraudulent actions detected by the electronic device (1) and the corrective actions activated by the electronic device (1) in response to any fraudulent actions detected.

14. The method according to claim 12, **characterized in that** it receives "unprotected" the data to be sent from the user interface (7) and it sends them to the non-secure data transmission network (8) after having protected them by means of codification/verification operations and wherein it decodes the protected data received from a remote user through the non-secure data transmission network (8) and sends the decoded data to the user interface (7).

15. The method according to claims 12 and 14, **characterized in that** the codification/verification and decodification operations are performed using standard ciphering/deciphering algorithms.

16. The method according to claim 12, **characterized in that** certain programs are performed simultaneously in the electronic device (1) and in the user interface (7).

17. The method according to claim 16, **characterized in that**, after an optional starting up and/or initialisation step (step 30), the logic unit (4) pertaining to the electronic device (1) performs at least the following functional steps:
- it acquires a data string (step 31) from the user interface (7);
- having verified (step 32) that a new data string has been received, it processes it (step 33), sends it (step 34) to a Personal Computer (9) pertaining to the non-secure data transmission network (8) and receives (step 35) data from the Personal Computer (9); otherwise it receives (step 35) data from the Personal Computer (9);
- having received (step 35) data from the Personal Computer (9) and having verified (step 36) that new data has been received, it processes it (step 37) by preparing the data strings to be sent to the user interface (7), sends (step 38) such strings to the user interface (7) and receives a data string (step 31) from the user interface (7); otherwise it receives (step 31) a data string from the user interface (7).

18. The method according to claim 16, **characterized in that**, after an optional starting up and/or initialisation step (step 40), a logic unit pertaining to the user interface (7) performs at least the following functional steps:
- it acquires a data string from the user (step 41);
- having verified (step 42) that it is a new data string, it processes it (step 43), sends it (step 44) to the electronic device (1) and receives (step 45) a data string from the electronic device (1); otherwise it receives (step 45) a data string from the electronic device (1);
- having received (step 45) a data string from the electronic device (1), it verifies that the data string received is new, processes it (step 47) and receives a data string from the user (step 41).

19. The method according to any of the claims 12 to 18, **characterized in that** it performs at least one of the following telematic transactions:
- mutual certification of the identity of the user and the good outcome of the transaction;
- non-repudiability of the transaction;
- verification of the authenticity of the data received;
- high protection of the crypted data.

20. A computer program that comprises program coding means suitable for performing the steps of the claims from 12 to 19, when said program is run on a computer.

21. Computer-legible means comprising a recorded program, said computer legible means comprising program coding means suitable for performing the steps of claims from 12 to 19, when said program is run on a computer.
